# EUROPEAN PATENT SPECIFICATION

(11) **EP 1 612 318 B1**
(45) Date of publication and mention of the grant of the patent: **05.01.2011**
(21) Application number: 05102881.9
(22) Date of filing: 12.04.2005
(51) Int. Cl.: D06F 58/24, D06F 25/00, B01D 53/26

(54) **Moisture condensing unit**
Kondensator
Condenseur

(30) Priority: 02.07.2004 KR 2004051659
(43) Date of publication of application: 04.01.2006
(73) Proprietor: SAMSUNG ELECTRONICS CO., LTD., Suwon-si, Gyeonggi-do (KR)
(72) Inventor: CHO, Hwang Mook, Gyeonggi-Do (KR); KIM, Hyung Gyoon, Gyeonggi-Do (KR); PYO, Sang Yeon, Gyeonggi-Do (KR); PARK, Jae Ryong, Gyeonggi-Do (KR); YANG, Byoung Yull, Gyeonggi-Do (KR)
(74) Representative: Grey, Ian Michael

(56) References cited:
- EP-A1- 0 585 519
- DE-A1- 1 808 534
- FR-A- 1 491 321
- GB-A- 280 268
- GB-A- 627 838
- JP-A- 4 067 899
- JP-A- 8 332 336
- JP-A- 2003 083 679
- US-A- 2 200 980
- US-A- 3 319 347
- US-A- 5 146 693

## Description

The present invention relates to a moisture condensing unit including a cyclone having a housing through which moist air flowing therethrough is centrifugally circulated. The invention also relates to a washing and/or drying machine comprising a tub to receive laundry to be washed and/or dried, an air duct in communication with the tub through which air is circulated back into the tub and a cyclone having a housing through which moist air flowing through the duct is centrifugally circulated. Such a washing and/or drying machine is known from JP 20020085161.

In order to wash laundry a wash cycle is performed. A conventional washing/drying machine includes a drum which may be rotated alternately in clockwise and counter-clockwise directions so that laundry together with washing water is repeatedly elevated upwards along the inner circumferential surface of the drum and is allowed to drop so as to agitate and wash laundry. After the wash cycle is complete, a drying cycle may be performed wherein air of high temperature and low humidity is circulated through the drum.

Accordingly, a conventional washing/drying machine comprises a tub to contain water, a drum rotatably installed in the tub to hold the laundry, a door installed on the front surface of the tub to allow access to the inside of the tub, and an air circulating duct installed outside the tub and connected to the drum through which air may be circulated for drying washed laundry.

An air fan and a heater are installed in the air circulating duct to forcibly circulate high temperature air through the drum. Cooling water spray nozzles are also disposed in the duct to condense moisture from the humid, high temperature air to reduce its humidity as the air passes therethrough.

After the wash cycle is complete, a drying cycle is initiated. The air fan and heater installed in the air circulating duct are operated such that air is circulated through the air circulating duct. Air passing through the duct contacts cooling water emitted from the spray nozzles and its temperature and humidity is reduced. The low temperature, low humidity air passes through the heater so as to be heated and to reduce its humidity and then passes through the laundry contained in the drum and its humidity is increased once again. The air of high temperature and high humidity again passes through the cooling water spray nozzles and through the above air circulating process to dry the laundry contained in the drum.

A conventional washing/drying machine, such as described above, has a disadvantage in that it has an excessively low condensing efficiency. The air of high temperature and high humidity flowing from the lower part of the air circulating duct to the upper part of the air circulating duct has insufficient time to contact the low temperature water, sprayed from the cooling water spray nozzles and be condensed into water.

In particular when the flow rate of the high temperature and highly humid air passing through the cooling spray nozzles is high, the circulating air returned to the drum contains water sprayed from the cooling water spray nozzles, and so water is supplied to the drum instead of cooling the circulating air to condense water.
Drying efficiency is thereby reduced.

Korean Patent Laid-open No. 2003-84070 discloses a drying machine in which a cyclone for generating moisture in a cyclone manner is installed in a cold air circulating duct. However, the cyclone of the aforementioned drying machine separates moisture from the air by centrifugally circulating the air passed through the drum. It therefore has a comparatively low condensing efficiency, and is incapable of increasing drying efficiency and shortening the time taken to dry the laundry.

Document JP-A-2003275497 discloses a moitsure condensing unit according to the preamble of claim 1, a maching according to the preamble of claims 10, 11 and a cyclone according to the preamble of claim 21.

The present invention seeks to provide a moisture condensing unit which overcomes or substantially alleviates the problems discussed above and in which air of high temperature and low humidity sufficiently contacts cooling water and so that water is condensed from the moist air more efficiently.

A moisture condensing unit according to the present invention is characterised by at least one inlet comprising a nozzle disposed on an upper surface of the housing of the cyclone being in communication with the interior of the cyclone housing for the introduction of water therein to cause moisture in the centrifugally circulating air to condense.

In one embodiment a plurality of nozzles are disposed radially in the cyclone housing.

The cyclone housing may comprise a first housing portion defined by a generally cylindrical part with an end wall surface and, a second conical housing portion depending from the first housing portion.

Preferably, a spiral groove is formed on the inner circumferential surface of the cyclone housing forming a water flow path down the cyclone housing.

In one embodiment, the moisture condensing unit further comprises a water collecting container located to receive water from the base of the cyclone housing.

Preferably, a moisture condensing unit further comprises a water discharge pipe communicating with the water collecting container.

Preferably, the water discharge pipe further comprises a switch valve located to control the discharge of water collecting container through the discharge pipe.

A sensor to detect the level of water may be located in the water collecting container and a controller may control the opening and closing of the switch valve in response to the sensor.

A washing/drying machine according to the present invention is characterised by a cooling water spray nozzle being disposed on an upper surface of the cyclone housing to cause moisture in the centrifugally circulating air to condense.

Embodiments of the present invention will now be described, by way of example only, with reference to the accompanying drawings, in which:
Figure 1 is a schematic perspective view of a cyclone condensing apparatus in accordance with the present invention;
Figure 2 is a cross-sectional view, taken along the line I-I of Figure 1, illustrating the flow of cooling water and air along a transverse direction in the cyclone condensing apparatus;
Figure 3 is a longitudinal sectional view, taken along the line II-II of Figure 1, illustrating the flow of cooling water and air along a longitudinal direction in the cyclone condensing apparatus; and
Figure 4 is a longitudinal sectional view of a washing/drying machine having the cyclone condensing apparatus.

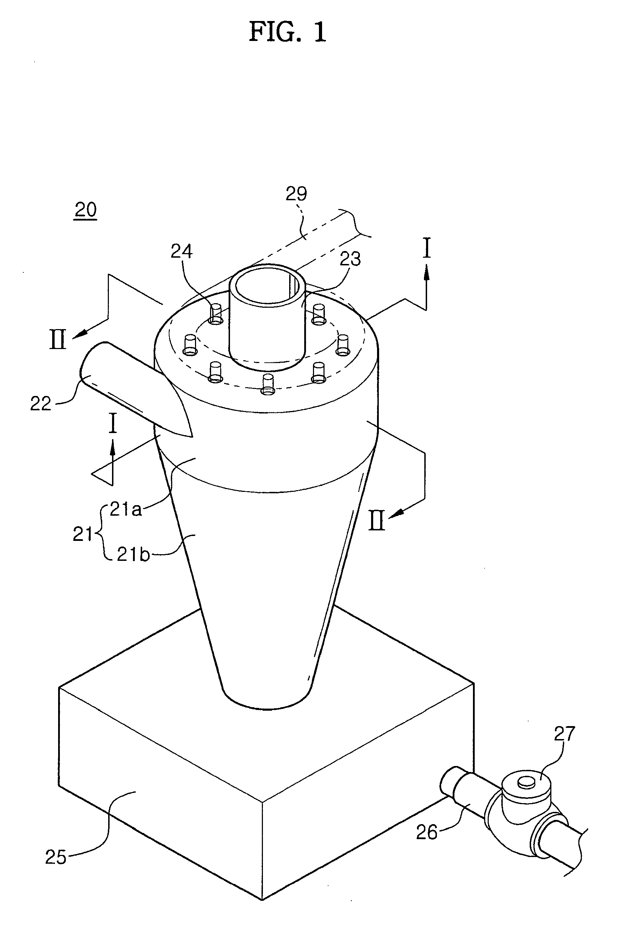

Referring to the drawings, there is shown in Figures 1 to 3, a cyclone condensing apparatus 20 comprising a casing 21 having an approximately conical shape, an air inlet 22 disposed on the upper part of the casing 21 along a tangential direction toward the inner circumferential surface of the casing 21, an air outlet 23 formed on the upper surface of the casing 21 along a central line, and a plurality of cooling water spray nozzles 24 arranged on the upper surface of the casing 21 in a circumferential direction.

The cyclone condensing apparatus 20 further comprises a water collecting container 25 connected to the lower end of the casing 21 for collecting condensed water generated from the casing 21, a discharge pipe 26 connected to the lower end of the water collecting container 25 for discharging the condensed water collected in the water collecting container 25 to the outside, and a switch valve 27 installed in the discharge pipe 26 for opening and closing the discharge pipe 26.

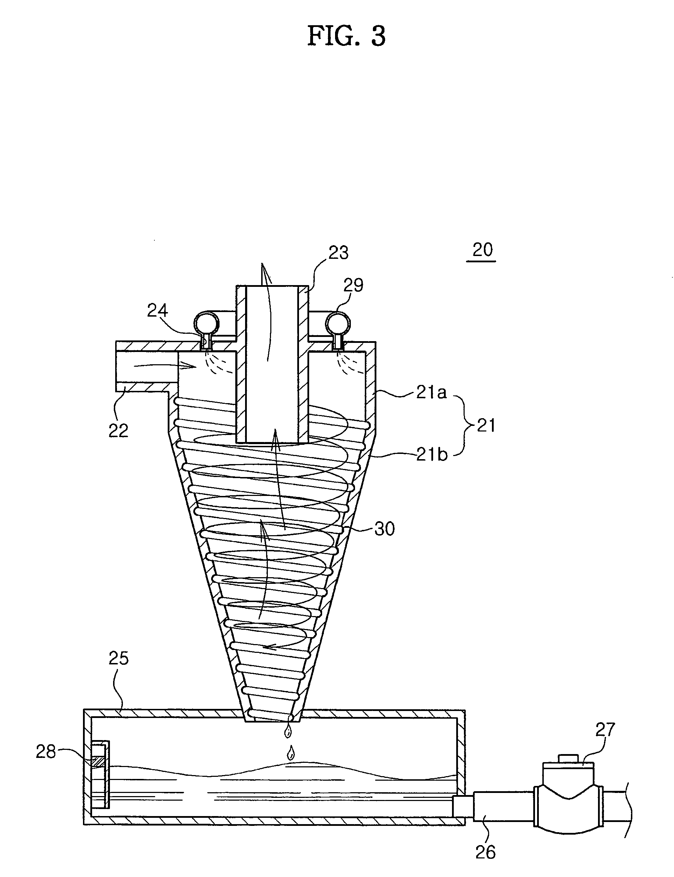

The switch valve 27 is a solenoid valve, which can be electrically opened and closed. A water level sensor 28 (with reference to Figure 3) is installed to sense the level of the condensed water at a designated height in the water collecting container 25 thereby allowing the switch valve 27 to be automatically opened and closed based on the level of the condensed water collected in the water collecting container 25.

The casing 21 includes a cylindrical portion 21a having a constant diameter, and a conical portion 21b having a diameter gradually decreasing downwardly from the cylindrical portion 21a. The lower end of the conical portion 21b is connected to the upper part of the water collecting container 25.

As shown in Figure 3, a spiral groove 30, neighbouring circular portions of which are separated from each other by a designated pitch, is formed in the inner circumferential surface of the casing 21 thereby rapidly guiding the condensed water to the lower part of the casing 21 which is generated when cooling water sprayed from the cooling water spray nozzles 24 is mixed with air in a high temperature and high humidity state entered from the air inlet 22.

A cooling water supply pipe 29 having a radial shape with a designated diameter is disposed on the upper surface of the casing 21 and each of the cooling water spray nozzles 24 extends downwardly from the cooling water supply pipe 29 to connect to the upper surface of the casing 21 wherein the cooling water spray nozzles 24 have diameters smaller than that of the cooling water supply pipe 29. The cooling water supply pipe 29 and the cooling water spray nozzles 24 serve as a water condensing unit for condensing and separating moisture contained in the high temperature and high humidity state air.

The air outlet 23 which is disposed along the central line of the casing 21, is provided with a lower end extended to the lower part of the cylindrical portion 21a of the casing 21, and an upper end passing through the upper surface of the casing 21 and extended upwardly.

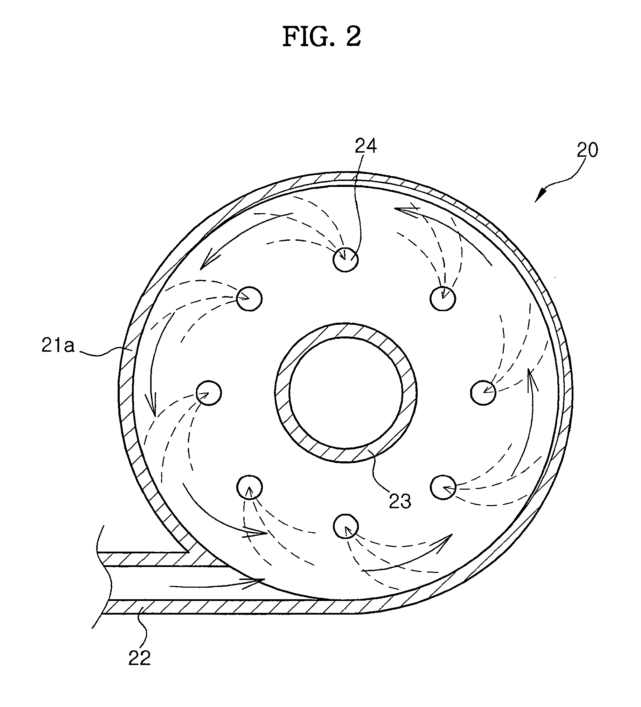

In the above described cyclone condensing apparatus, as shown in Figure 2, air in the high temperature and high humidity state enters the air inlet 22 and flows along the inner circumferential surface of the casing 21. Simultaneously, cooling water supplied to the casing 21 by cooling water spray nozzles 24 through the cooling water supply pipe 29 is bent towards the inner circumferential surface of the casing 21 by the centrifugal force due to the flow of the high temperature and high humidity air and is mixed with the air.

Accordingly, as shown in Figure 3, moisture contained in the air in the high temperature and high humidity state is cooled and condensed by the cooling water such that the air is changed into a lower temperature and low humidity state and discharged through the air outlet 23 to the outside. The condensed water flows down along the spiral groove 30 formed in the inner circumferential surface of the casing 21 and is stored in the water collecting container 25.

The level of the condensed water stored in the water collecting container 25 is detected by the water level sensor 28 so that when the condensed water reaches a designated level, the switch valve 27 installed in the drainage pipe 26 is automatically opened and the condensed water discharged to the outside. When the condensed water stored in the water collecting container 25 is detected by the water level sensor 28, to be lower than a designated level, the switch valve 27 is automatically closed so as to collect the condensed water in the water collecting container 25.

The use of the above process to change the air in a high temperature and high humidity state to a low temperature and low humidity state thereby improves the condensing efficiency of the cyclone condensing apparatus.

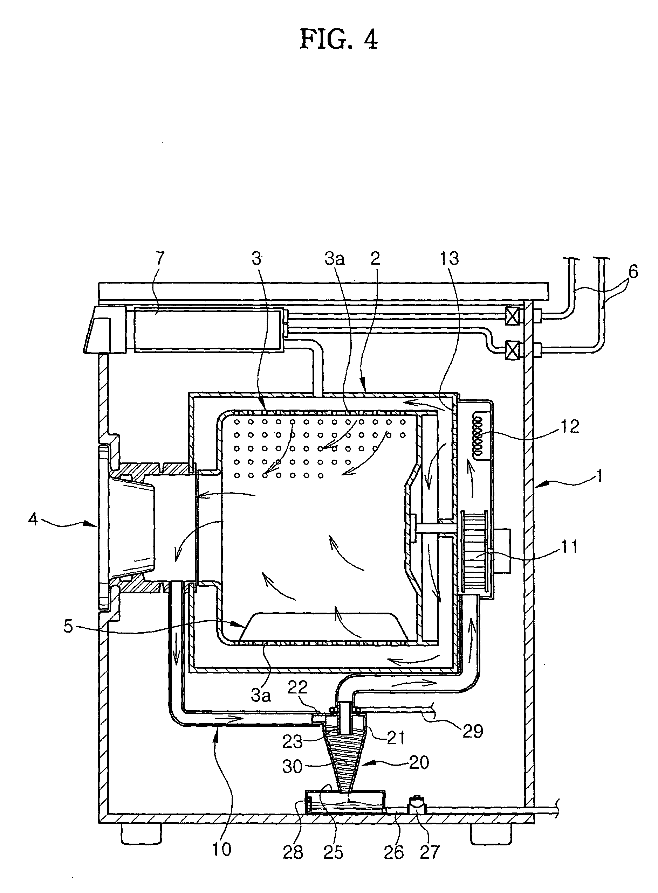

As shown in Figure 4, the washing/drying machine having the cyclone condensing apparatus of the present invention comprises a housing 1 for defining an external appearance, a tub 2 horizontally installed in the housing 1 for containing wash water, a drum 3 rotatably installed in the tub 2 and provided with a plurality of dehydration holes 3a formed therethrough, and a driving motor (not shown) rotating the drum 3 for performing washing, rinsing and dehydrating operations.

The drum 2 serves as a washing drum in the washing operation, and serves as a drying drum in the drying operation.

The front surfaces of the tub 2 and the drum 3 are opened so that laundry can be put into and taken out of the drum 3 through the opened front surfaces of the tub 2 and the drum 3. A door 4 for opening and closing the opened front surfaces of the tub 2 and the drum 3 is hinged to the front surface of the housing 1. Lifters 5, which are arranged on the inner circumferential surface of the drum 3, elevate the laundry by the rotation of the drum 3 to a designated height, and then drop the laundry, thereby washing the laundry.

Water supply hoses 6, for supplying wash water from the outside to the tub 2, and a detergent container 7, for mixing detergent with the supplied wash water, are installed on the top of the housing 1, and a drainage pump (not shown) for discharging the washing water to the outside of the housing 1, is installed on the bottom of the housing 1.

An air circulating duct 10 for forming a closed circuit together with the drum 3 is installed outside the tub 2 thereby blowing air of a high temperature and low humidity state to the laundry contained in the drum 3 in the drying operation so that the washed laundry is rapidly dried.

An inlet of the air circulating duct 10 is placed at the opened front surface of the tub 2, and an outlet of the air circulating duct 10 is placed at the rear surface of the tub 2, through which through holes 13 are formed. An air blast fan 11 and a heater 12, for forcibly circulating the air of the high temperature through the air circulating duct 10, are installed adjacent to the outlet of the air circulating duct 10.

The cyclone condensing apparatus 20 is installed in the housing 1 such that the air inlet 22 and the air outlet 23 are connected to a middle portion of the air circulating duct 10 and the water collecting container 25 is disposed on the bottom of the housing 1. The cooling water supply pipe 29 is connected to the water supply hoses 6 so that the cooling water is supplied to the cooling water supply pipe 29, and the drainage pipe 26 connected to the water collecting container 25 is extended to the outside of the housing 1 so that the condensed water is discharged to the outside. When the air blast fan 11 of the washing/drying machine having the cyclone condensing apparatus 20 of the present invention is operated in the drying operation, the high temperature and high humidity air in the drum 3 flows through the air circulating duct 10, is changed into a low temperature and low humidity state by the cyclone condensing apparatus 20 and is then changed into a high temperature and low humidity state by the heater 12. The air in the high temperature and low humidity state subsequently flows into the drum 3 through the through holes 13 of the tub 2 and the dehydration holes 3a of the drum 3 thereby drying the laundry.

By the above described process, the laundry contained in the drum 3 is rapidly dried, and the condensed water generated from the cyclone condensing apparatus 20 is discharged to the outside through the draining pipe 26 due to the interaction between the switch valve 27 and the water level sensor 28.

As apparent from the above description, the present invention provides a cyclone condensing apparatus having a structure in which air of high temperature and high humidity sufficiently contacts cooling water and condensed water is efficiently discharged to the outside and a washing/drying machine having the cyclone condensing apparatus, thereby rapidly condensing water from the air to shorten the time taken to dry laundry, and shortening an operating time of a heater to reduce power consumption.

Although embodiments of the invention have been shown and described, it will be appreciated by those skilled in the art that changes may be made in these embodiments without departing from the principles of the invention, the scope of which is defined in the claims.

## Claims

1. A moisture condensing unit including a cyclone having a housing (21) through which moist air flowing therethrough is centrifugally circulated, and at least one inlet in communication with the interior of the cyclone housing (21) for the introduction of water therein to cause moisture in the centrifugally circulating air to condense, **characterised by** the at least one inlet comprising a cooling water spray nozzle (24) being disposed on an upper surface of the cyclone housing (21).

2. A moisture condensing unit according to claim 1, wherein the cyclone housing (21) has a tangential airflow inlet (22) and an axial airflow outlet (23).

3. A moisture condensing unit according to claims 1 or 2, comprising a plurality of nozzles (24) disposed radially on the upper surface of the cyclone housing (21).

4. A moisture condensing unit according to any preceding claim wherein the cyclone comprises a first housing portion (21a) defined by a generally cylindrical part with the upper surface and, a second conical housing portion (21b) depending from the first housing portion (21a).

5. A moisture condensing unit according to any preceding claim wherein a spiral groove (30) is formed on the inner circumferential surface of the cyclone housing (21) to form a flow path for condensed water.

6. A moisture condensing unit according to any preceding claim, comprising a water collecting container (25) to receive condensed water from the cyclone housing (21).

7. A moisture condensing unit according to claim 6, further comprising a water discharge pipe (26) communicating with the water collecting container (25).

8. A moisture condensing unit according to claim 7, comprising a switch valve (27) in the discharge pipe (26) to enable water to be discharged from the water collecting container (25) through the discharge pipe (26).

9. A moisture condensing unit according to claim 8, comprising a sensor (28) in the water collecting container (25) to detect the level of water in the water collecting container (25) and a controller to control opening and closing of the switch valve (27) in response to the sensor (28).

10. A washing/drying machine comprising a tub (2) to receive laundry to be washed and/or dried, an air duct (10) in communication with the tub (2) through which air is circulated back into the tub (2) and a cyclone having a housing (21) through which moist air flowing through the duct (10) is centrifugally circulated, **characterised by** at least one cooling water spray nozzle (24) disposed on an upper surface of the cyclone housing (21) and in communication with the interior of the cyclone housing (21) for the introduction of water into the cyclone housing (21) to cause moisture in the centrifugally circulating air to condense.

11. A washing/drying machine comprising a dry tub (2), an air circulating duct (10) connected to the dry tub (2) for forming a closed circuit together with the dry tub (2), an air blast fan (11) for forcibly circulating air, a heater (12) for heating the air and a cyclone condensing apparatus (20), installed in the air circulating duct (10), including a casing (21), an air inlet (22) and an air outlet (23) connected to the air circulating duct (10), and a water condensing unit which condenses moisture contained in the air of the casing (21), **characterised in that** the water condensing unit comprises at least one cooling water spray nozzle (24) disposed on an upper surface of the casing (21).

12. The washing/drying machine according to claim 11, wherein the air inlet (22) is connected to an upper part of the casing (21) along a tangential direction, the air outlet (23) is disposed perpendicular to a central portion of the casing (21).

13. The washing/drying machine according to claim 12, wherein the cyclone condensing apparatus further includes a spiral groove (30) formed in an inner circumferential surface of the casing (21) for guiding condensed water, generated from cooling water sprayed from the at least one cooling water spray nozzle (24), to a lower part of the casing (21).

14. The washing/drying machine according to claim 13, wherein the casing (21) includes a cylindrical portion (21 a) having a constant diameter, and a conical portion (21b) having a diameter gradually decreasing downwardly from the cylindrical portion (21a) and the air inlet (22) is connected to the cylindrical portion (21 a).

15. The washing/drying apparatus according to claim 14, wherein a lower end of the air outlet (23) is extended from an inside of the casing (21) to a lower part of the cylindrical portion (21a) of the casing (21) and an upper end of the air outlet (23) passes through an upper surface of the casing (21) and is connected to the air circulating duct (10).

16. The washing/drying apparatus according to claim 14, wherein the water condensing unit further includes a cooling water supply pipe (29) having a disk shape, disposed along an edge of the casing (21), and the at least one cooling water spray nozzle (24) is extended from the cooling water supply pipe (29) and disposed on the upper surface of the casing (21) in a circumferential direction.

17. The washing/drying apparatus according to claim 15, wherein the cyclone condensing apparatus (20) further includes a water collecting container (25) connected to a lower end of the casing (21) for collecting condensed water flowing down along the spiral groove (30).

18. The washing/drying apparatus according to claim 17, wherein the cyclone condensing apparatus (20) further includes a discharge pipe (26) connected to a lower end of the water collecting container (25) for discharging the condensed water collected in the water collecting container (25) to the outside and a switch valve (27) installed in the discharge pipe (26).

19. The washing/drying apparatus according to claim 18, wherein the cyclone condensing apparatus (20) further includes a water level sensor (28) installed at a designated height in the water collecting container (25) for automatically opening and closing the switch valve (27).

20. The washing/drying apparatus according to claim 19, further comprising a housing (1) wherein the dry tub (2) is rotatably installed in the housing (1) and the water collecting container (25) is installed on the housing (1).

21. A cyclone condensing apparatus comprising a casing (21), an air inlet (22) connected to an upper part of the casing (21) along a tangential direction, an air outlet (23) disposed on a central portion of the casing (21) **characterised by** at least one cooling water spray nozzle (24) being disposed on an upper surface of the casing (21).

22. The cyclone condensing apparatus according to claim 21, further comprising a spiral groove (30) formed in an inner circumferential surface of the casing (21) for guiding condensed water, generated from cooling water sprayed from the at least one cooling water spray nozzle (24), to a lower part of the casing (21).

23. The cyclone condensing apparatus according to claim 21, wherein the casing (21) includes a cylindrical portion (21a) having a constant diameter, and a conical portion (21b) having a diameter gradually decreasing downwardly from the cylindrical portion (21a) and the air inlet (22) is connected to the cylindrical portion (21a).

24. The cyclone condensing apparatus according to claim 23, wherein a lower end of the air outlet (23) is extended from an inside of the casing (21) to a lower part of the cylindrical portion (21a) of the casing (21), and an upper end of the air outlet (23) passes through an upper surface of the casing (21) and is adapted to be connected to an air circulating duct (10).

25. The cyclone condensing apparatus according to claim 23, wherein the at least one cooling water spray nozzle (24) is extended from a cooling water supply pipe (29), having a disk shape, disposed along an edge of the casing (21), and disposed at a designated interval on the upper surface of the casing (21) in a circumferential direction.

26. The cyclone condensing apparatus according to claim 24, further comprising a water collecting container (25) connected to a lower end of the casing (21) for collecting condensed water flowing down along the spiral groove (30).

27. The cyclone condensing apparatus according to claim 26, further comprising a discharge pipe (26) connected to a lower end of the water collecting container (25) for discharging the condensed water collected in the water collecting container (25) and a switch valve (27) installed in the discharge pipe (26).

28. The cyclone condensing apparatus according to claim 27, further comprising a water level sensor (28) installed at a designated height in the water collecting container (25) for automatically opening and closing the switch valve (27).

## Patentansprüche

1. Feuchtigkeitskondensatoreinheit, enthaltend einen Zyklon mit einem Gehäuse (21), durch den feuchte Luft, die **dadurch** strömt, zentrifugal zirkuliert gelassen wird, und mindestens einen Einlass in Kommunikation mit dem Inneren des Zyklongehäuses (21) für die Einleitung von Wasser dort hinein, um zu bewirken, dass Feuchtigkeit in der zentrifugal zirkulierenden Luft kondensiert, **gekennzeichnet dadurch, dass** der mindestens eine Einlass eine Kühlwasser-Sprühdüse (24) umfasst, die an einer oberen Oberfläche des Zyklongehäuses (21) angeordnet ist.

2. Feuchtigkeitskondensatoreinheit nach Anspruch 1, wobei das Zyklongehäuse (21) einen tangentialen Luftstromeinlass (22) und einen axialen Luftstromauslass (23) aufweist.

3. Feuchtigkeitskondensatoreinheit nach Anspruch 1 oder 2, umfassend eine Vielzahl von Düsen (24), die radial an der oberen Oberfläche des Zyklongehäuses (21) angeordnet sind.

4. Feuchtigkeitskondensatoreinheit nach einem der vorstehenden Ansprüche, wobei der Zyklon einen ersten Gehäuseabschnitt (21a) umfasst, der durch einen im Allgemeinen zylindrischen Teil mit der oberen Oberfläche definiert wird, und einen zweiten konischen Gehäuseabschnitt (21b), der von dem ersten Gehäuseabschnitt (21a) abhängt.

5. Feuchtigkeitskondensatoreinheit nach einem der vorstehenden Ansprüche, wobei eine spiralförmige Rille (30) an der inneren Umfangsoberfläche des Zyklongehäuses (21) gebildet ist, um einen Flussweg für kondensiertes Wasser zu bilden.

6. Feuchtigkeitskondensatoreinheit nach einem der vorstehenden Ansprüche, umfassend einen Wassersammelbehälter (25) zum Empfangen von kondensiertem Wasser von dem Zyklongehäuse (21).

7. Feuchtigkeitskondensatoreinheit nach Anspruch 6, weiter umfassend ein Wasserabflussrohr (26), das mit dem Wassersammelbehälter (25) kommuniziert.

8. Feuchtigkeitskondensatoreinheit nach Anspruch 7, umfassend ein Umschaltventil (27) in dem Abflussrohr (26), um zu ermöglichen, dass Wasser von dem Wassersammelbehälter (25) durch das Abflussrohr (26) abgelassen werden kann.

9. Feuchtigkeitskondensatoreinheit nach Anspruch 8, umfassend einen Sensor (28) in dem Wassersammelbehälter (25), um den Wasserstand in dem Wassersammelbehälter (25) zu detektieren, und eine Steuerung, um Öffnen und Schließen des Umschaltventils (27) als Reaktion auf den Sensor (28) zu steuern.

10. Wasch-/Trockenmaschine, umfassend einen Bottich (2) zum Aufnehmen von Wäsche, die zu waschen und/oder trocknen ist, einen Luftschacht (10) in Kommunikation mit dem Bottich (2), durch den Luft zurück in den Bottich (2) zirkuliert gelassen wird, und einen Zyklon mit einem Gehäuse (21), durch den feuchte Luft, die durch den Schacht (10) strömt, zentrifugal zirkuliert gelassen wird, **gekennzeichnet durch** mindestens eine Kühlwasser-Sprühdüse (24), die an einer oberen Oberfläche des Zyklongehäuses (21) angeordnet ist und mit dem Inneren des Zyklongehäuses (21) für die Einleitung von Wasser in das Zyklongehäuse (21) in Kommunikation steht, um zu bewirken, dass Feuchtigkeit in der zentrifugal zirkulierenden Luft kondensiert.

11. Wasch-/Trockenmaschine, umfassend einen Trockenbottich (2), einen Luftzirkulationsschacht (10), der mit dem Trockenbottich (2) verbunden ist, um zusammen mit dem Trockenbottich (2) einen geschlossenen Kreislauf zu bilden, ein Luftstromgebläse (11) für Zwangszirkulation von Luft, eine Heizung (12) zum Erwärmen der Luft und eine Zyklonkondensatorvorrichtung (20), die in dem Luftzirkulationsschacht (10) eingebaut ist, enthaltend eine Hülle (21), einen Lufteinlass (22) und einen Luftauslass (23), der mit dem Luftzirkulationsschacht (10) verbunden ist, und eine Wasserkondensatoreinheit, die Feuchtigkeit kondensiert, die in der Luft der Hülle (21) enthalten ist, **dadurch gekennzeichnet, dass** die Wasserkondensatoreinheit mindestens eine Kühlwasser-Sprühdüse (24) umfasst, die an einer oberen Oberfläche der Hülle (21) angeordnet ist.

12. Wasch-/Trockenmaschine nach Anspruch 11, wobei der Lufteinlass (22) mit einem oberen Teil der Hülle (21) entlang einer tangentialen Richtung verbunden ist, der Luftauslass (23) senkrecht zu einem mittleren Abschnitt der Hülle (21) angeordnet ist.

13. Wasch-/Trockenmaschine nach Anspruch 12, wobei die Zyklonkondensatorvorrichtung weiter eine spiralförmige Rille (30) enthält, die in einer inneren Umfangsoberfläche der Hülle (21) gebildet ist, um kondensiertes Wasser, das von Kühlwasser erzeugt wird, das von der mindestens einen Kühlwasser-Sprühdüse (24) gesprüht wird, zu einem unteren Teil der Hülle (21) zu leiten.

14. Wasch-/Trockenmaschine nach Anspruch 13, wobei die Hülle (21) einen zylindrischen Abschnitt (21a) mit einem konstanten Durchmesser und einen konischen Abschnitt (21b) mit einem Durchmesser, der abwärtsgerichtet von dem zylindrischen Abschnitt (21a) graduell abnimmt, enthält und der Lufteinlass (22) mit dem zylindrischen Abschnitt (21a) verbunden ist.

15. Wasch-/Trockenvorrichtung nach Anspruch 14, wobei ein unteres Ende des Luftauslasses (23) sich von einer Innenseite der Hülle (21) zu einem unteren Teil des zylindrischen Abschnitts (21a) der Hülle (21) erstreckt und ein oberes Ende des Luftauslasses (23) durch eine obere Oberfläche der Hülle (21) verläuft und mit dem Luftzirkulationsschacht (10) verbunden ist.

16. Wasch-/Trockenvorrichtung nach Anspruch 14, wobei die Wasserkondensatoreinheit weiter ein Kühlwasser-Zuführrohr (29) mit einer Scheibenform enthält, die entlang einer Kante der Hülle (21) angeordnet ist, und die mindestens eine Kühlwasser-Sprühdüse (24) sich von dem Kühlwasser-Zuführrohr (29) erstreckt und an der oberen Oberfläche der Hülle (21) in einer Umfangsrichtung angeordnet ist.

17. Wasch-/Trockenvorrichtung nach Anspruch 15, wobei die Zyklonkondensatorvorrichtung (20) weiter einen Wassersammelbehälter (25) enthält, der mit einem unteren Ende der Hülle (21) verbunden ist, um kondensiertes Wasser zu sammeln, das durch die spiralförmige Rille (30) nach unten fließt.

18. Wasch-/Trockenvorrichtung nach Anspruch 17, wobei die Zyklonkondensatorvorrichtung (20) weiter ein Abflussrohr (26), das mit einem unteren Ende des Wassersammelbehälters (25) verbunden ist, um das kondensierte Wasser, das in dem Wassersammelbehälter (25) gesammelt wurde, nach außen abzulassen, und ein Umschaltventil (27), das in dem Abflussrohr (26) eingebaut ist, enthält.

19. Wasch-/Trockenvorrichtung nach Anspruch 18, wobei die Zyklonkondensatorvorrichtung (20) weiter einen Wasserstandsensor (28) enthält, der an einer festgelegten Höhe in dem Wassersammelbehälter (25) zum automatischen Öffnen und Schließen des Umschaltventils (27) eingebaut ist.

20. Wasch-/Trockenvorrichtung nach Anspruch 19, weiter ein Gehäuse (1) umfassend, wobei der Trockenbottich (2) drehbar in dem Gehäuse (1) eingebaut ist und der Wassersammelbehälter (25) an dem Gehäuse (1) eingebaut ist.

21. Zyklonkondensatorvorrichtung, umfassend eine Hülle (21), einen Lufteinlass (22), der mit einem oberen Teil der Hülle (21) entlang einer tangentialen Richtung verbunden ist, einen Luftauslass (23), der an einem mittleren Abschnitt der Hülle (21) angeordnet ist, **gekennzeichnet durch** mindestens eine Kühlwasser-Sprühdüse (24), die an einer oberen Oberfläche der Hülle (21) angeordnet ist.

22. Zyklonkondensatorvorrichtung nach Anspruch 21, weiter umfassend eine spiralförmige Rille (30), die in einer inneren Umfangsoberfläche der Hülle (21) gebildet ist, um kondensiertes Wasser, das von Kühlwasser erzeugt wird, das von der mindestens einen Kühlwasser-Sprühdüse (24) gesprüht wird, zu einem unteren Teil der Hülle (21) zu leiten.

23. Zyklonkondensatorvorrichtung nach Anspruch 21, wobei die Hülle (21) einen zylindrischen Abschnitt (21a) mit einem konstanten Durchmesser und einen konischen Abschnitt (21b) mit einem Durchmesser, der abwärtsgerichtet von dem zylindrischen Abschnitt (21a) graduell abnimmt, enthält und der Lufteinlass (22) mit dem zylindrischen Abschnitt (21a) verbunden ist.

24. Zyklonkondensatorvorrichtung nach Anspruch 23, wobei ein unteres Ende des Luftauslasses (23) sich von einer Innenseite der Hülle (21) zu einem unteren Teil des zylindrischen Abschnitts (21a) der Hülle (21) erstreckt und ein oberes Ende des Luftauslasses (23) durch eine obere Oberfläche der Hülle (21) verläuft und angepasst ist, um mit einem Luftzirkulationsschacht (10) verbunden zu werden.

25. Zyklonkondensatorvorrichtung nach Anspruch 23, wobei die mindestens eine Kühlwasser-Sprühdüse (24) sich von einem Kühlwasser-Zuführrohr (29) mit einer Scheibenform erstreckt, entlang einer Kante der Hülle (21) angeordnet ist und an einem festgelegten Intervall an der oberen Oberfläche der Hülle (21) in einer Umfangsrichtung angeordnet ist.

26. Zyklonkondensatorvorrichtung nach Anspruch 24, weiter umfassend einen Wassersammelbehälter (25), der mit einem unteren Ende der Hülle (21) verbunden ist, um kondensiertes Wasser zu sammeln, das durch die spiralförmige Rille (30) nach unten fließt.

27. Zyklonkondensatorvorrichtung nach Anspruch 26, weiter umfassend ein Abflussrohr (26), das mit einem unteren Ende des Wassersammelbehälters (25) verbunden ist, um das kondensierte Wasser, das in dem Wassersammelbehälter (25) gesammelt wurde, abzulassen, und ein Umschaltventil (27), das in dem Abflussrohr (26) eingebaut ist.

28. Zyklonkondensatorvorrichtung nach Anspruch 27, weiter umfassend einen Wasserstandsensor (28), der an einer festgelegten Höhe in dem Wassersammelbehälter (25) zum automatischen Öffnen und Schließen des Umschaltventils (27) eingebaut ist.

## Revendications

1. Dispositif de condensation d'humidité comportant un cyclone ayant un logement (21) à travers lequel l'air humide le traversant est circulé de façon centrifuge, et au moins une entrée en communication avec l'intérieur du logement de cyclone (21) pour l'introduction d'eau dans celui-ci pour amener l'humidité dans l'air circulé de façon centrifuge à se condenser, **caractérisé par le fait que** l'au moins une entrée comprenant une buse de vaporisation d'eau de refroidissement (24) est disposée sur une surface supérieure du logement de cyclone (21).

2. Dispositif de condensation d'humidité selon la revendication 1, dans lequel le logement de cyclone (21) comporte une entrée d'écoulement d'air tangentielle (22) et une sortie d'écoulement d'air axiale (23).

3. Dispositif de condensation d'humidité selon la revendication 1 ou 2, comprenant une pluralité de buses (24) disposées radialement sur la surface supérieure du logement de cyclone (21).

4. Dispositif de condensation d'humidité selon l'une quelconque des revendications précédentes, dans lequel le cyclone comprend une première partie de logement (21a) définie par une pièce généralement cylindrique avec la surface supérieure et, une seconde partie de logement conique (21b) dépendant de la première partie de logement (21a).

5. Dispositif de condensation d'humidité selon l'une quelconque des revendications précédentes, dans lequel une rainure spiralée (30) est formée sur la surface circonférentielle interne du logement de cyclone (21) afin de former un chemin d'écoulement pour l'eau condensée.

6. Dispositif de condensation d'humidité selon l'une quelconque des revendications précédentes, comprenant un récipient de collecte d'eau (25) destiné à recevoir l'eau condensée provenant du logement de cyclone (21).

7. Dispositif de condensation d'humidité selon la revendication 6, comprenant en outre un tuyau de décharge d'eau (26) communiquant avec le récipient de collecte d'eau (25).

8. Dispositif de condensation d'humidité selon la revendication 7, comprenant un clapet de commutation (27) dans le tuyau de décharge (26) pour permettre la décharge d'eau depuis le récipient de collecte d'eau (25) à travers le tuyau de décharge (26).

9. Dispositif de condensation d'humidité selon la revendication 8, comprenant un capteur (28) dans le récipient de collecte d'eau (25) pour détecter le niveau d'eau dans le récipient de collecte d'eau (25) et une unité de commande pour commander l'ouverture et la fermeture du clapet de commutation (27) en réponse au capteur (28).

10. Machine à laver/sèche-linge comprenant une cuve (2) pour recevoir le linge à laver et/ou sécher, une conduite d'air (10) en communication avec la cuve (2) à travers laquelle l'air est recirculé de retour dans la cuve (2) et un cyclone ayant un logement (21) à travers lequel l'air humide s'écoulant à travers la conduite (10) est circulé de façon centrifuge, **caractérisé par le fait qu'**au moins une buse de vaporisation d'eau de refroidissement (24) est disposée sur une surface supérieure du logement de cyclone (21) et est en communication avec l'intérieur du logement de cyclone (21) pour l'introduction d'eau dans le logement de cyclone (21) afin d'amener l'humidité dans l'air circulant de façon centrifuge à se condenser.

11. Machine à laver/sèche-linge comprenant une cuve sèche (2), une conduite de circulation d'air (10) raccordée à la cuve sèche (2) pour former un circuit fermé avec la cuve sèche (2), un ventilateur souffleur d'air (11) pour faire circuler de force l'air, un élément chauffant (12) pour chauffer l'air et un appareil de condensation à cyclone (20), installé dans la conduite de circulation d'air (10), comportant un carter (21), une entrée d'air (22) et une sortie d'air (23) raccordés à la conduite de circulation d'air (10), et un dispositif de condensation d'eau qui condense l'humidité contenue dans l'air du carter (21), **caractérisé en ce que** le dispositif de condensation d'eau comprend au moins un buse de vaporisation d'eau de refroidissement (24) disposée sur une surface supérieure du carter (21).

12. Machine à laver/sèche-linge selon la revendication 11, dans lequel l'entrée d'air (22) est raccordée à une pièce supérieure du carter (21) dans un sens tangentiel, la sortie d'air (23) est disposée perpendiculairement à une partie centrale du carter (21).

13. Machine à laver/sèche-linge selon la revendication 12, dans lequel l'appareil de condensation à cyclone comporte en outre une rainure spiralée (30) formée dans une surface circonférentielle interne du carter (21) pour guider l'eau condensée, générée à partir de l'eau de refroidissement vaporisée depuis l'au moins une buse de vaporisation d'eau de refroidissement (24), vers une pièce inférieure du carter (21).

14. Machine à laver/sèche-linge selon la revendication 13, dans lequel le carter (21) comporte une partie cylindrique (21a) ayant un diamètre constant, et une partie conique (21b) ayant un diamètre diminuant graduellement vers le bas depuis la partie cylindrique (21a) et l'entrée d'air (22) est raccordée à la partie cylindrique (21a).

15. Appareil de lavage/sèche-linge selon la revendication 14, dans lequel une extrémité inférieure de la sortie d'air (23) est étendue depuis un intérieur du carter (21) jusqu'à une partie inférieure de la partie cylindrique (21a) du carter (21) et une extrémité supérieure de la sortie d'air (23) passe à travers une surface supérieure du carter (21), et est raccordée à la conduite de circulation d'air (10).

16. Appareil de lavage/sèche-linge selon la revendication 14, dans lequel le dispositif de condensation d'eau comporte en outre un tuyau d'alimentation d'eau de refroidissement (29) en forme de disque, disposé le long d'un bord du carter (21), et l'au moins une buse de vaporisation d'eau de refroidissement (24) est étendue depuis le tuyau d'alimentation d'eau de refroidissement (29) et disposée sur la surface supérieure du carter (21) dans un sens circonférentiel.

17. Appareil de lavage/sèche-linge selon la revendication 15, dans lequel l'appareil de condensation à cyclone (20) comporte en outre un récipient de collecte d'eau (25) raccordé à une extrémité inférieure du carter (21) pour collecter l'eau condensée s'écoulant vers le bas depuis la rainure spiralée (30).

18. Appareil de lavage/sèche-linge selon la revendication 17, dans lequel l'appareil de condensation à cyclone (20) comporte en outre un tuyau de décharge (26) raccordé à une extrémité inférieure du récipient de collecte d'eau (25) pour décharger l'eau condensée collectée dans le récipient de collecte d'eau (25) vers l'extérieur et un clapet de commutation (27) installé dans le tuyau de décharge (26).

19. Appareil de lavage/sèche-linge selon la revendication 18, dans lequel l'appareil de condensation à cyclone (20) comporte en outre un capteur de niveau d'eau (28) installé à une hauteur désignée dans le récipient de collecte d'eau (25) pour ouvrir et fermer automatiquement le clapet de commutation (27).

20. Appareil de lavage/sèche-linge selon la revendication 19, comprenant en outre un logement (1) dans lequel la cuve sèche (2) est montée de façon rotative dans le logement (1) et le récipient de collecte d'eau (25) est monté sur le logement (1).

21. Appareil de condensation à cyclone comprenant un carter (21), une entrée d'air (22) raccordée à une pièce supérieure du carter (21) dans un sens tangentiel, une sortie d'air (23) disposée sur une partie centrale du carter (21), **caractérisé par** au moins une buse de vaporisation d'eau de refroidissement (24) disposée sur une surface supérieure du carter (21).

22. Appareil de condensation à cyclone selon la revendication 21, comprenant en outre une rainure spiralée (30) formée dans une surface circonférentielle interne du carter (21) pour guider l'eau condensée, générée à partir de l'eau de refroidissement vaporisée depuis l'au moins une buse de vaporisation d'eau de refroidissement (24), vers une pièce inférieure du carter (21).

23. Appareil de condensation à cyclone selon la revendication 21, dans lequel le carter (21) comporte une partie cylindrique (21a) d'un diamètre constant, et une partie conique (21b) d'un diamètre diminuant graduellement vers le bas depuis la partie cylindrique (21a) et l'entrée d'air (22) est raccordée à la partie cylindrique (21a).

24. Appareil de condensation à cyclone selon la revendication 23, dans lequel une extrémité inférieure de la sortie d'air (23) est étendue depuis un intérieur du carter (21) jusqu'à une pièce inférieure de la partie cylindrique (21a) du carter (21) et une extrémité supérieure de la sortie d'air (23) passe à travers une surface supérieure du carter (21), et est adaptée pour être raccordée à la conduite de circulation d'air (10).

25. Appareil de condensation à cyclone selon la revendication 23, dans lequel l'au moins une buse de vaporisation d'eau de refroidissement (24) est étendue depuis le tuyau d'alimentation d'eau de refroidissement (29), en forme de disque, disposée le long d'un bord du carter (21), et disposée à un intervalle désigné sur la surface supérieure du carter (21) dans un sens circonférentiel.

26. Appareil de condensation à cyclone selon la revendication 24, comprenant en outre un récipient de collecte d'eau (25) raccordé à une extrémité inférieure du carter (21) pour collecter l'eau condensée s'écoulant vers le bas depuis la rainure spiralée (30).

27. Appareil de condensation à cyclone selon la revendication 26, comprenant en outre un tuyau de décharge (26) raccordé à une extrémité inférieure du récipient de collecte d'eau (25) pour décharger l'eau condensée collectée dans le récipient de collecte d'eau (25) et un clapet de commutation (27) installé dans le tuyau de décharge (26).

28. Appareil de condensation à cyclone selon la revendication 27, comprenant en outre un capteur de niveau d'eau (28) installé à une hauteur désignée dans le récipient de collecte d'eau (25) pour ouvrir et fermer automatiquement le clapet de commutation (27).
